# EUROPÄISCHE PATENTANMELDUNG

(11) **EP 1 618 947 A1**
(43) Veröffentlichungstag der Anmeldung: **25.01.2006**
(21) Anmeldenummer: 05405390.5
(22) Anmeldetag: 17.06.2005
(51) Int. Cl.: B01J 2/20, B29B 9/06

(54) **Schneidvorrichtung für zähplastische Materialien sowie Verfahren zum Betrieb der Schneidvorrichtung**

(30) Priorität: 21.07.2004 CH 123204
(71) Anmelder: Coperion Buss AG, 4133 Pratteln 1 (CH)
(72) Erfinder: Rieck, Andreas, 4424 Arboldswil (CH)
(74) Vertreter: Rottmann, Maximilian

(57) **Zusammenfassung**

Eine Schneidvorrichtung für zähplastische Materialien ist mit einer Düse (1) mit durch Trennstege (4a, 4b, 4c) unterteilten Austrittsöffnungen (3) versehen. Angrenzend an die Düse (1) folgt ein mit mehreren Messern (7a) versehenes Schneidwerkzeug (6) zum Abtrennen von aus den Austrittsöffnungen (3) der Düse (1) austretenden Materialsträngen. Der jeweilige Trennsteg (4b) ist zumindest so breit wie ein Messer (7a) ausgebildet. Das Schneidwerkzeug (6) wird zur Ausführung eines Schneidvorgangs intervallmässig bewegt, wobei das jeweilige Messer (7a) zwischen zwei Schneidvorgängen hinter einem Trennsteg (4b) in der Ruheposition verharrt. Zur Ausführung eines Schneidvorgangs wird das Schneidwerkzeug (6) soweit gedreht, bis sich das jeweilige Messer (7a) hinter dem benachbarten anderen Steg (4b, 4c) befindet.

## Beschreibung

Die Erfindung bezieht sich auf eine Schneidvorrichtung für zähplastische Materialien nach dem Oberbegriff des Anspruchs 1 sowie auf ein Verfahren zum Betrieb der Schneidvorrichtung nach dem Oberbegriff des Anspruchs 9.

Schneidvorrichtungen der hier zur Rede stehenden Art werden insbesondere zum Zerkleinern von in einem Extruder aufbereiteten Kunststoffen eingesetzt.

Bekannt sind beispielsweise Schneidvorrichtungen in der Granulatherstellung, wo Messer über sogenannte Düsenplatten bewegt und die austretenden Produktstränge zu kleinen, möglichst gleichförmig geformten Stücken - den Granulaten - zerschnitten werden. Ausserdem gibt es Anwendungen in der Kunststoffaufbereitung für Nachfolgeeinrichtungen zur Herstellung von bahnförmigen Produkten wie z.B. Kalanderanlagen, Walzwerke und Kalandretten, wo ebenfalls ein strangförmig austretendes Material zu Stücken aufgetrennt wird.

Bei Anlagen in der Granulatherstellung sind ausserdem Schneidvorrichtungen bekannt, wo die Messerwelle sowohl zentrisch zur sogenannten Düsenplatte als auch nicht zentrisch angeordnet ist. In beiden Fällen läuft die Messerwelle mit gleichförmiger, rotierender Bewegung und kann zur Festlegung der geschnittenen Produktstücklänge in der Winkelgeschwindigkeit angepasst werden.

Es sind aber auch Schneidvorrichtungen bekannt, wo ein Schneidwerkzeug in translatorischer Bewegung an der Düsenöffnung vorbeigeführt wird. Für den Antrieb werden pneumatisch wirkende Arbeitszylinder oder Exzentergetriebe verwendet.

Allen Schneidvorrichtungen gemeinsam ist, dass sie sauber abgetrennte Produktstücke zu erzeugen haben, sowohl über einen grossen Materialdurchsatzbereich der Aufbereitungsanlagen, als auch für in der Konsistenz sehr unterschiedliche Produkte. Wird der Materialdurchsatz verändert, so wird - um die Schnittlänge des Produktes beizubehalten - bei den auf rotatorischem Antrieb basierenden Schneidwerkzeugen die Geschwindigkeit (Drehzahl) angepasst. Bei geringen Durchsatzraten werden demnach geringere Drehzahlen und damit Schnittgeschwindigkeiten realisiert.

Wird eine bestimmte Schnittgeschwindigkeit, die abhängig ist von der Viskoelastizität des zu trennenden Produktes, unterschritten, so verschlechtert sich das Schnittbild, was bis zum Abquetschen des Stückes führen kann. Die dadurch entstandenen deformierten Stücke beeinträchtigen die Weiterverarbeitung des Produktes, indem sie eine schlechte Rieselfähigkeit, eine schlechte Dosierbarkeit sowie ein schlechtes Transportverhalten aufweisen. Ausserdem begünstigen diese unförmigen Stücke ein Zusammenhaften -Agglomeratbildung-, was eine Weiterverarbeitung in vielen Fällen gänzlich verhindert und bis zu einer Blockierung der Transporteinrichtung oder zumindest einer schlechten Dosierbarkeit führt.

Pneumatisch angetriebene, translatorisch arbeitende Schneidvorrichtungen erlauben das Beibehalten einer brauchbaren Schnittgeschwindigkeit. Die Einhaltung der Stücklängen bei Materialdurchsatzänderungen wird über eine sogenannte Stillstands- oder Pausenzeit reguliert. Probleme treten jedoch dann auf, wenn höhere Materialdurchsatzraten erwünscht sind. Die Stillstands- bzw. Pausenzeiten gehen dann gegen Null und die Schnittfrequenz wird durch die zulässigen Lastwechsel der Pneumatikeinheit begrenzt. Die Einschränkungen in Lebensdauer und Leistungsfähigkeit haben diese Schneidvorrichtungen in ihrer Anwendung zurückgedrängt. Die translatorisch arbeitenden Schneidvorrichtungen mit Exzenterantrieb zeigen ähnliche Symptome wie die bekannten rotatorisch arbeitenden Vorrichtungen. Bei Reduzierung des Materialdurchsatzes wird die Drehzahl und damit die Schnittgeschwindigkeit herabgesetzt zur Anpassung auf die Stücklänge. Ausserdem verursacht der Exzenter eine relativ gross bauende Einheit, was einschränkend sein kann in der Zugänglichkeit bzw. in der Handhabung. Gleiches gilt für die rotierenden Schneidvorrichtungen mit einer nicht zentrisch zur Düse gelagerten Schneidwerkzeugwelle.

Bekannte Schneidvorrichtungen haben wegen des Problems einer zu geringen Schnittgeschwindigkeit bei geringeren Materialdurchsatzraten bereits eine kleinere Anzahl von Schneidwerkzeugen als Produktaustrittsöffnungen an der Düse vorhanden sind, zumal sich mit jedem zusätzlichen Schneidwerkzeug die Schnittgeschwindigkeit weiter verringern würde. Sind mehr Produktaustrittsöffnungen als Schneidwerkzeuge vorhanden, so kommt es beim Schneiden zum Aufeinanderschieben und Verkleben von Produktstücken, weil einzelne Produktströme sequentiell vom Schneidwerkzeug überstrichen werden. Die Folge sind Agglomeratbildung und eingeschränkte Weiterverarbeitung.

Ein weiterer Nachteil bei bekannten Schneidvorrichtungen ist die Erscheinung des Anpressens des aus der Düse austretenden Materialstromes an die zum Produkt gerichteten Flächen des Schneidwerkzeuges. Je langsamer die Schnittgeschwindigkeit, um so intensiver und länger wird das Anpressen des extrudierten Materials. Die dabei entstehenden Kräfte können eine bleibende Deformation des Schneidwerkzeuges erzeugen. Bei den oft zu schneidenden thermisch sensiblen Kunststoffmaterialien (z.B. PVC) führen diese Anpressungen zu Materialanhaftungen an der Oberfläche des Schneidwerkzeuges. Nach kurzer Zeit entsteht ein Schichtaufbau und eine thermische Degradation -Verbrennung- setzt ein. Diese geschädigten Sedimentierungen lösen sich und verunreinigen das weiter zu verarbeitende Produkt. Um das zu verhindern, muss der kontinuierlich laufende Prozess angehalten und die kritische Zone gereinigt werden. Dieser Stopp verursacht einen Ausfall des gesamten Produktionsprozesses was bei Kalanderanlagen bis zu mehreren Stunden dauern kann und schmerzhafte monetäre Verluste nach sich zieht.

Aus der DE-A-196 31 182 ist eine Vorrichtung zum Granulieren verschiedener Stoffe wie Kunststoffe oder Lebensmittel bekannt. Die eigentliche Granuliereinrichtung ist einem Extruder nachgeschaltet und besteht aus einem hohlzylindrischen, endseitig verschlossenen Gehäuse, das mit einer Vielzahl von radial verlaufenden Löchern versehen ist, aus denen das zu granulierende Material austritt. Um eine gleichmässige Verteilung des zu granulierenden Materials auf alle Löcher zu erreichen, sind im Gehäuse Planetenwalzspindeln angeordnet. Auf der Aussenseite des Gehäuses sind zwei umlaufende, in einer Gabel gehaltene Messer angeordnet, mittels welchen die aus den Löchern austretenden Schmelzstränge abgeschnitten werden. Die Länge der abgetrennten Granulat-Partikel wird durch die Drehzahl der Gabel sowie die Austrittsgeschwindigkeit der Schmelze bestimmt. Nebst den eingangs bereits erwähnten Nachteilen besteht bei einer derartigen Vorrichtung die Gefahr, dass durch die Zentrifugalbeschleunigung der Schneidwerkzeuge krümelförmige oder zu klein geschnittene Produktteile in den Spalt zwischen den rotierenden Messern und der Aussenseite des Gehäuses gelangen können, was zu einem Blockieren der Antriebseinheit führen kann.

Aus der EP-A-1 108 509 eine Extrusionsvorrichtung zum Extrudieren von Kunststoffmaterial bekannt, die ausgangsseitig mit einer mit Messern versehenen Ausbringeinheit versehen ist. Die Extrusionsvorrichtung ist in herkömmlicher Weise mit einem Schneckenzylinder versehen, in dem eine mit Schneckengängen versehene Schneckenwelle rotierbar angeordnet ist. Am Ende des Schneckenzylinders ist eine Zylinderspitze angeordnet, durch welche eine ringförmige Ausbringöffnung in der Ausbringeinheit begrenzt wird. Innerhalb dieser Ausbringöffnung sind Messer ortsfest angeordnet, wobei zwischen den Messern Durchtrittsöffnungen verbleiben, über welche das plastizierte Kunststoffmaterial austreten kann. An diesen Messern streifen die sich relativ zur Ausbringeinheit drehenden Schneckengänge der Schneckenwelle das austretende Kunststoffmaterial ab und erzeugen Materialstrang-Abschnitte.

Aus der US 3,029,466 geht eine Granuliervorrichtung für thermoplastische Kunststoffe hervor, auf die ein Kühlflüssigkeitstank aufgesetzt ist. Die Granuliervorrichtung ist mit einer Düsenplatte versehen, über deren Düsen flüssiges Harz axial in den Kühlflüssigkeitstank austreten kann. Das austretende Harz erstarrt sofort in der Kühlflüssigkeit. Zum Abtrennen der austretenden Harzstränge ist ein Messerkopf mit Schneidmessern vorgesehen, der in zwei unterschiedlichen Betriebsmodi betrieben werden kann. Im einen Fall rotiert der Messerkopf, wobei die Rotationsgeschwindigkeit veränderbar ist. Die für diesem Betriebsmodus vorgesehenen Messer sind nur auf der einen Seite mit einer Schneidkante versehen. Im andern Fall führt der Messerkopf eine Oszillationsbewegung -Hin- und Herbewegung- aus, wobei die für diesen Betriebsmodus vorgesehenen Messer beidseitig mit einer Schneidkante versehen sind, damit sie das aus der Düsenplatte austretende Harz in beiden Dreh-Richtungen abtrennen.

Aus der US 5,888,558 ist eine Schneidvorrichtung für Nahrungsmittel bekannt, die am Austritt von Düsen eines Kochextrusionssystems angeordnet ist. Die Schneidvorrichtung ist mit einer Schneideinrichtung versehen, die einstückig ausgebildet ist und zwei Messer umfasst. Die Messer sind austauschbar, wobei unterschiedlich gestaltete Messer vorgesehen sind, um dem erzeugten Endprodukt eine bestimmtes Aussehen zu verleihen. Um die Dicke des erzeugten Endprodukts variieren zu können, ist vorgesehen, die Rotationsgeschwindigkeit der Schneidvorrichtung zu verändern bzw. in ein bestimmtes Verhältnis zur Austrittsgeschwindigkeit des aus der jeweiligen Düse austretenden Produkts zu setzen. Namentlich wird erwähnt, dass der die Schneidvorrichtung antreibende Schaft mit einer Drehzahl von 2000min⁻¹ rotieren soll, wenn die Produktfliessrate 300kg/h beträgt.

Die DE 25 57 166 offenbart einen Extruder mit einem horizontal angeordneten Zylinder und einer drehbar darin aufgenommene Schnecke. Am Ausgang des Zylinders ist ein Granulator angeordnet, dessen Längsachse vertikal verläuft. Im Übergangsbereich vom Zylinder zum Granulator ist eine mit Durchtrittsöffnungen versehene Prallplatte angeordnet. Im Innern des Granulators ist eine Formfläche ausgebildet, in welche radiale Formdüsen münden. Zudem ist ein Messer vorgesehen, welches vor der Formfläche rotiert. Zum Abkühlen des extrudierten Kunststoffes wird Kühlwasser durch den Granulator geleitet. Mittels des Messers werden die aus den Formdüsen austretenden Kunststoffstränge abgeschnitten und in Kügelchen aufgeteilt.

Aus der US 3,874,835 ist eine Schneidvorrichtung zur Erzeugung von Pellets bekannt. Diese ist mit einem herkömmlichen Extruder versehen, an dessen Ausgang ein Schneidkopf quer zur Längsachse des Extruders angeordnet ist. Dieser Schneidkopf ist mit zwei hohlzylindrischen Gehäuseteilen versehen, welche koaxial zueinander angeordnet sind, wobei im innen liegenden Gehäuseteil ein Messer rotiert. Beide Gehäuseteile sind mit mehreren radialen Bohrungen versehen, welche dem Extruder zugewandt und korrespondierend zueinander ausgebildet sind. Der Innere Gehäuseteil kann zudem mit Gruppen von Bohrungen versehen sein, deren Durchmesser unterschiedlich gross ist. Durch Verdrehen des inneren Gehäuseteils können die radialen Bohrung des inneren Gehäuseteils relativ zu den radialen Bohrung des äusseren Gehäuseteils verschoben werden, womit der Durchtrittsquerschnitt für das aus dem Extruder geförderte Material verändert, verkleinert oder geschlossen wird.

In der US 5,435,714 ist eine Vorrichtung zum Erzeugen von dreidimensionalen Nahrungsmitteln offenbart. Die Vorrichtung ist mit einer Mehrzahl von Öffnungen versehen, über welche die Lebensmittelmasse austreten kann. Zum Abtrennen der aus den Öffnungen austretenden Lebensmittelmasse ist eine Schneidvorrichtung mit einer Mehrzahl von ersten und zweiten Messern vorgesehen. Während die ersten Messer die Austrittsöffnungen vollkommen überstreichen, sind die zweiten Messer in radialer Richtung kürzer ausgebildet, so dass sie nur einen Teil der jeweiligen Öffnung überstreichen. Auf diese Weise kann der austretenden Lebensmittelmasse eine dreidimensionale Form verpasst werden. Durch verändern der Rotationsgeschwindigkeit sowie der Anzahl Messer kann die Dicke und Form der erzeugten Nahrungsmittelstücke verändert werden.

Schliesslich ist aus der DE-A-101 37 525 eine Vorrichtung zum Granulieren von aus Düsen austretenden thermoplastischen Kunststoffen bekannt. Die Vorrichtung ist mit einer Düsenscheibe versehen, in die eine Vielzahl von axial, d.h. parallel zur Längsmittenachse der Vorrichtung verlaufenden Düsen eingelassen sind, aus denen der zu granulierende Kunststoff in schmelzflüssiger Form austritt. Der Düsenscheibe gegenüber ist eine drehbare Ringplatte angeordnet, die mit Messern versehen ist, welche die Düsenplatte in bekannter Weise überstreichen und die aus den Düsen austretenden Kunststoffstränge zerschneiden. Die Ringplatte ist an einem glockenförmig gestalteten Messerträger abgestützt. Zur Kühlung des durch die rotierenden Messer geschnittenen Granulats wird auf der Innenseite des rotierenden Messerträgers Kühlwasser zugeführt.

Die Aufgabe der Erfindung besteht nun darin, eine Schneidvorrichtung der im Oberbegriff des Anspruchs 1 genannten Art derart zu verbessern, dass die Länge der zu schneidenden Stücke unabhängig von der Vorschubgeschwindigkeit des zu schneidenden Materials und der Drehgeschwindigkeit der Messer gewählt werden kann, wobei über die gesamte Anwendungsbreite eine saubere Trennung des Produktes gewährleistet werden soll und Agglomeratbildungen beim Schneiden sowie Produktionsausfälle durch von geschnittenen Stücken verursachte Blockierung sich drehender Elemente weitestgehend zu vermeiden sind und wobei an den Oberflächen der Schneidwerkzeuge sowie der Düsenplatte möglichst keine Materialanhaftungen und damit thermische Produktschädigungen über längere Zeit entstehen sollen. Ausserdem sollte die Schneidvorrichtung wenig Raum benötigen und handhabungsfreundlich im Aufbau sein.

Diese Aufgabe wird mit einer Schneidvorrichtung gelöst, welche mit den im Kennzeichen des Anspruchs 1 angeführten Merkmale versehen ist.

Indem bei der erfindungsgemässen Schneidvorrichtung der jeweilige Trennsteg zumindest so breit ist wie ein Messer und das Schneidwerkzeug zur Ausführung eines Schneidvorgangs intervallmässig gedreht wird und das jeweilige Messer in der Ruheposition hinter einem Steg verharrt, während es zur Ausführung des Schneidvorgangs von einem zu einem anderen Steg bewegt wird, werden eine hohe Flexibilität erreicht und die vorstehend angeführten Nachteile weitestgehend vermieden. Unter intervallmässig drehen ist im vorliegenden Fall zu verstehen, dass das Schneidwerkzeug um einen bestimmten Winkel verdreht wird um einen Schneidvorgang auszuführen und dass es danach während eines bestimmten Zeitraums stillsteht und den Ruhezustand einnimmt. Während der Zeitspanne, in der das Schneidwerkzeug den Ruhezustand einnimmt, kann das Produkt um einen bestimmten Betrag aus der Austrittsdüse austreten, ohne dass es dabei mit dem Schneidwerkzeug in Berührung kommt. Die Zeitspanne, während der das Schneidwerkzeug 6 stillsteht, also in der Ruheposition verharrt, ist im Normalfall länger als die Zeitspanne die es benötigt, um von einem Steg zum anderen bewegt zu werden, also um einen Schneidvorgang auszuführen.

Der Hauptvorteil der erfindungsgemässen Schneidvorrichtung liegt darin, dass die Länge der zu schneidenden Stücke über die Dauer des Ruhezustandes und nicht über die Schnittgeschwindigkeit und die Vorschubgeschwindigkeit des zu schneidenden Materials bestimmt werden kann. Die Schnittgeschwindigkeit kann zudem unabhängig von der Vorschubgeschwindigkeit des zu schneidenden Materials so angepasst werden, dass je nach Materialkonsistenz eine saubere Abtrennung der Stücke erreicht wird. Die Gefahr des Abquetschens aufgrund zu niedriger Schnittgeschwindigkeiten ist damit ausgeschlossen. Bei zum Beispiel niedrigem Produktdurchsatz befindet sich das Schneidwerkzeug länger im Ruhezustand als bei höherem Produktdurchsatz - wenn die Länge der geschnittenen Stücke beibehalten werden soll. Bei sehr hohen Produktdurchsätzen, also grossen Produktaustrittsgeschwindigkeiten, kann die Dauer des Ruhezustandes so kurz sein, dass dieser übergangen und die Vorrichtung - wie bekannt - mit gleichförmiger Drehbewegung betrieben wird. Durch Anpassung - Erhöhung - der Drehzahl der Schneidwerkzeugwelle bei weiterer Materialdurchsatzerhöhung ist die Einhaltung der geschnittenen Stücklängen gesichert.

Bevorzugte Ausführungsbeispiele der Erfindung sind in den abhängigen Ansprüchen 2 bis 8 definiert.

Im Anspruch 9 ist zudem ein Verfahren zum Betrieb der Schneidvorrichtung definiert, während die Ansprüche 10 bis 13 bevorzugte Verfahrensformen umschreiben.

Im Folgenden wird die Erfindung anhand eines bevorzugten Ausführungsbeispieles und mit Bezug auf die beiliegenden Zeichnungen näher erläutert. Dabei zeigt:
Fig. 1 Die schematisch dargestellte Schneidvorrichtung in einer perspektivischen Ansicht;
Fig. 2 die Schneidvorrichtung gemäss Fig. 1 in einem Längsschnitt durch das Schneidwerkzeug und die Düse;
Fig. 3 die Düse und das sich in der Ruheposition befindliche Schneidwerkzeug in einer vergrösserten Ansicht, und
Fig. 4 die Düse und das sich in der Wirkposition befindliche Schneidwerkzeug in einer vergrösserten Ansicht.

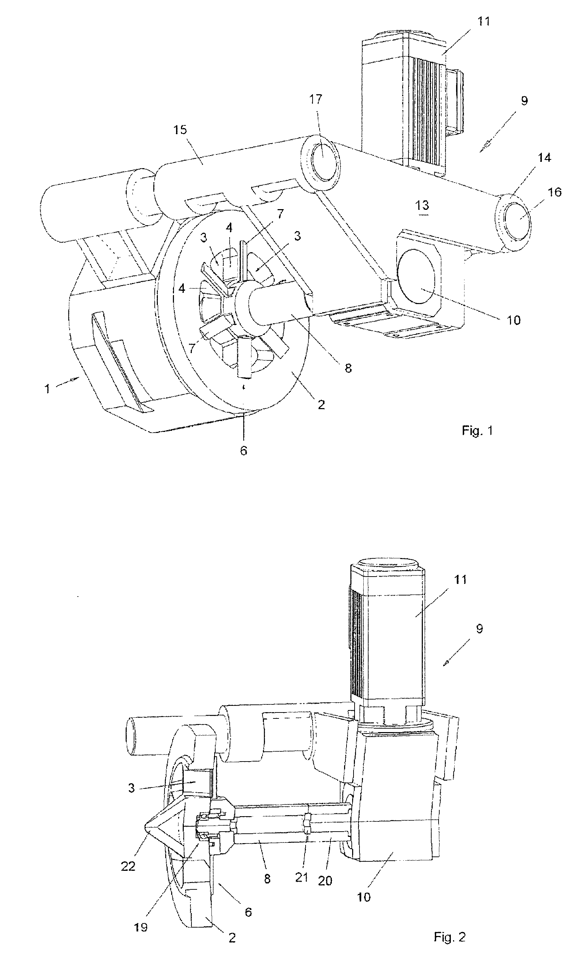

Anhand der Fig. 1 wird der grundsätzliche Aufbau der Schneidvorrichtung näher erläutert. Die Schneidvorrichtung besteht aus einer gesamthaft mit 1 bezeichneten Düse, die üblicherweise am Ausgang einer Aufbereitungsmaschine, beispielsweise einem Extruder oder einer Misch- und Knetmaschine, angeordnet ist. Die Aufbereitungsmaschine selber ist nicht dargestellt. Die Düse 1 ist ausgangsseitig mit einer Düsenplatte 2 versehen, deren Stirnseite unter einem rechten Winkel zur Längsachse der Düse 1 verläuft. In die Düsenplatte 2 sind mehrere, im wesentlichen parallel zur Längsachse der Düse 1 verlaufende Austrittsöffnungen 3 eingelassen, über welche das in der Aufbereitungsmaschine aufbereitete Produkt axial aus der Düse 1 austreten kann. Die einzelnen Austrittsöffnungen 3 in der Düsenplatte 2 sind mittels Trennstegen 4 geteilt. Angrenzend an die Düsenplatte 2 folgt ein Schneidwerkzeug 6, das mit mehreren, propellerförmig angeordneten Messern 7 versehen ist. Das Schneidwerkzeug 6 ist auf einer drehbaren Antriebswelle 8 abgestützt, welche ihrerseits mit einer Antriebseinheit 9 verbunden ist. Die Antriebswelle 8 ist mittels eines aus dieser Darstellung nicht ersichtlichen Loslagers so in der Düsenplatte 2 abgestützt, dass die Drehachse des Schneidwerkzeugs 6 koaxial zur Längsachse der Düse 1 verläuft. Zum intervallmässigen Bewegen des Schneidwerkzeugs 6 ist eine programmierbare Steuereinheit und eine Antriebseinheit 9 vorgesehen. Von der Antriebseinheit 9 sind eine Getriebeeinheit 10 sowie ein Elektromotor 11 dargestellt. Die Antriebseinheit 9 kann beispielsweise aus einer programmierbaren Servomotor-Getriebekombination, auch als schrittmotorischer Antrieb bekannt, oder einer Motor-Schrittschaltgetriebekombination, z.B. Malteserkreuzgetriebe, bestehen. Die Breite eines einzelnen Messers 7 ist derart auf die Breite eines Trennstegs 4 abgestimmt, dass es in der in Fig. 1 gezeigten Ruheposition in axialer Richtung vom jeweiligen Trennsteg überdeckt wird, so dass es den aus den Austrittsöffnungen austretenden Produktstrom nicht behindert. Die gesamte Antriebseinheit 9 ist an einem Support 13 aufgehängt, der seinerseits mittels zwei Führungen 14, 15 an zwei Führungssäulen 16, 17 abgestützt ist.

In der Fig. 2 ist die Schneidvorrichtung gemäss Fig. 1 in einem Längsschnitt durch das Schneidwerkzeug 6 und die Düsenplatte 2 dargestellt. Aus dieser Darstellung ist insbesondere ersichtlich, dass die Antriebswelle 8 mittels eines Loslagers 19 an der Düsenplatte 2 abgestützt und mehrteilig ausgebildet ist. Namentlich weist die Antriebswelle 8 einen mit der Getriebeeinheit 10 gekoppelten Wellenabschnitt 20 auf, der mittels einer Klauenkupplung 21 mit der eigentlichen Antriebswelle 8 verbunden ist. Um das Schneidwerkzeug 6 entfernen zu können, muss der Support 13 zusammen mit der Antriebseinheit 9 auf den Führungssäulen 16, 17 um die Tiefe des Loslagers 19 in der Düsenplatte 2 plus die Länge der Kupplung 21 zwischen Flansch 20 und Antriebswelle 8 von der Düsenplatte 2 wegbewegt werden. Danach kann das Schneidwerkzeug 6 entnommen werden. Das Entnehmen des Schneidwerkzeugs 6 kann beispielsweise zu Reinigungszwecken oder zu dessen Austausch erfolgen. Auf der Eingangsseite der Düsenplatte 2 ist im weiteren ein kegelförmiges Führungsorgan 22 ersichtlich, welches den Produktstrom in Richtung der Austrittsöffnungen 3 umlenkt.

Durch die Lagerung der Antriebswelle 8 unmittelbar im Zentrum der Düsenplatte 2 ist eine exakte Führung des Schneidwerkzeugs 6 und der Messer 7 entlang der Stirnseite der Düsenplatte 2 gegeben. Über die zur Längsachse der Düse 1 parallele Verschiebund Arretierbarkeit der gesamten Schneidvorrichtung ist einerseits ein präzises Einstellen des Abstandes "Schneidwerkzeug - Oberfläche Düsenplatte" möglich und andererseits ein schnelles Austauschen des kompletten Schneidwerkzeugs 6 gegeben.

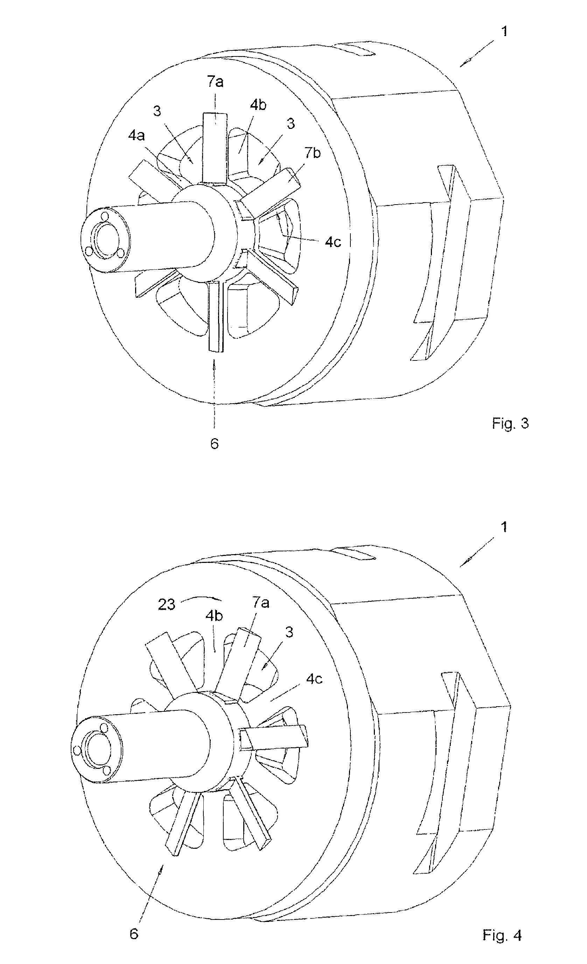

Fig. 3 zeigt die Düse 1 zusammen mit dem Schneidwerkzeug 6 in einer vergrösserten Darstellung. Das Schneidwerkzeug 6 befindet sich im Ruhezustand, d.h. die einzelnen Messer 7a, 7b des Schneidwerkzeugs 6 werden in axialer Richtung, d.h. in Richtung der Längsachse der Düse 1, vom jeweiligen Trennsteg 4b, 4c überdeckt, so dass sie den axial aus den Austrittsöffnungen 3 austretenden Produktstrom nicht behindern. Der aus den Austrittsöffnungen austretenden Produktstrom ist nicht eingezeichnet. Wenn von Ruhezustand gesprochen wird, dann ist darunter der Stillstand der Schneidvorrichtung 6 zu verstehen, d.h. die Schneidvorrichtung 6 bewegt sich nicht, sondern verharrt so lange in diesem Ruhezustand, bis ein neuer Trennvorgang ausgeführt werden muss.

Fig. 4 zeigt das Schneidwerkzeug 6 im Wirkzustand. Um die einzelnen, axial aus den Austrittsöffnungen austretenden Produktstränge abzutrennen, wird das Schneidwerkzeug 6 intervallmässig in Richtung des Pfeiles 23 gedreht. Im vorliegenden Fall weist die Düse 1 insgesamt sechs Trennstege 4a, 4b, 4c und sechs Messer 7a, 7b auf. Um ein Messer 7a von einem Trennsteg 4b zu einem benachbarten Trennsteg 4c zu drehen, muss das Schneidwerkzeug um 360°/Anzahl der Stege (360°/6 = 60°), also um 60° gedreht werden. Die Anzahl der Trennstege wie auch der Messer bewegt sich vorzugsweise zwischen drei und acht. Vorzugsweise ist ein einzelner Trennsteg etwas breiter als ein einzelnes Messer, so dass das Messer beim Anfahren der Schneidvorrichtung, innerhalb des zur Verfügung stehenden Wegs hinter dem jeweiligen Steg, bereits auf die gewünschte Mindest-Schnittgeschwindigkeit beschleunigt werden kann. Die Gesamtzeit zum Ausführen eines Schneidvorgangs, d.h. die Zeitdauer, die ein Messer vom Moment des Anfahrens hinter einem Steg bis zum Stillstand hinter dem nachfolgenden Steg benötigt, liegt in der Regel zwischen 0.05 und 0.2 Sekunden. Es versteht sich, dass die vorgängige Zeitangabe lediglich als Richtwert zu betrachten ist und je nach Produkt, Viskosität, Vorschubgeschwindigkeit etc. variieren kann. Wichtig ist jedoch, dass das einzelne Messer zum einen relativ schnell auf die vorgegebene Schnittgeschwindigkeit beschleunigt wird und letztere relativ hoch angesetzt wird, damit die durch den austretenden Produktstrang auf das einzelne Messer ausgeübte Axialkraft gering bleibt. Bei einer schnell ablaufenden Schnittbewegung werden die Messer 7 vom austretenden Produktstrom axial nur geringfügig belastet, weshalb auch die Gefahr von Materialanpressungen und Ablagerungen sehr klein ist. Ausserdem kann das Schneidwerkzeug wegen der geringeren Axialkrafteinwirkung schlanker ausgebildet werden, was das Schneidverhalten wiederum verbessert, da dem Messer beim Durchtrennen des Produkts ein geringerer Widerstand entgegengesetzt wird.

Dadurch, dass jeder Austrittsöffnungen 3 ein Schneidwerkzeug zugeordnet ist, werden bei einer Drehbewegung der Schneidvorrichtung alle austretenden Produktstränge gleichzeitig getrennt. Ein Aufeinanderschieben und damit Zusammenhaften der Produktstücke, wie es bei bekannten Schneidvorrichtungen passiert, ist damit ausgeschlossen.

Bei einer alternativen Ausführungsform der Schneidvorrichtung ist vorgesehen, dass die Längsachsen der Austrittsöffnungen radial zur Längsachse der Düse verlaufen bzw. radial in die zylindrische Mantelfläche der Düse eingelassen sind. Auch in diesem Fall verläuft die Drehachse des Schneidwerkzeugs vorzugsweise koaxial zur Längsachse der Düse. Die einzelnen Messer hingegen bewegen sich auf einer Kreisbahn entlang der zylindrischen Mantelfläche.

Anstelle einer Drehrichtung kann die Schneidvorrichtung auch hin- und herbewegt werden, wobei sie vorzugsweise nach jedem Intervall, d.h. nach jedem Stillstand, die Drehrichtung ändert. In diesem Fall müssten die Messer beidseitig mit einer Schneidkante versehen sein, damit die aus den Austrittsöffnungen austretenden Produktstränge von dem jeweiligen Messer in beiden Drehrichtungen abgeschnitten werden.

## Patentansprüche

1. Schneidvorrichtung für zähplastische Materialien, insbesondere zum Zerkleinern von in einem Extruder oder in einer Misch- und Knetmaschine aufbereiteten Kunststoffen, mit einer Düse (1) mit durch Trennstege (4) unterteilten Austrittsöffnungen (3), sowie einem drehbaren, mehrere Messer (7) aufweisenden Schneidwerkzeug (6) zum Abtrennen von aus den Austrittsöffnungen (3) der Düse (1) austretenden Materialsträngen, wobei der jeweilige Trennsteg (4b) zumindest so breit ist wie ein Messer (7a), **dadurch gekennzeichnet, dass** das Schneidwerkzeug (6) zur Ausführung eines Schneidvorgangs intervallmässig bewegt wird, wobei das jeweilige Messer (7a) zwischen zwei Schneidvorgängen hinter einem Trennsteg (4b) in der Ruheposition verharrt, während es zur Ausführung eines Schneidvorgangs jeweils von dem einen zu dem benachbarten anderen Steg (4b, 4c) bewegt wird.

2. Schneidvorrichtung nach Anspruch 1, **dadurch gekennzeichnet, dass** die Düse zumindest drei Trennstege (4) zum Unterteilen der Austrittsöffnungen (3) aufweist und das Schneidwerkzeug (6) eine mit der Anzahl der Trennstege (4) korrespondierende Anzahl Messer (7) aufweist, und dass das Schneidwerkzeug (6) zur Ausführung eines Schneidvorgangs intervallmässig um 360°/Anzahl der Stege gedreht wird.

3. Schneidvorrichtung nach Anspruch 1 oder 2, **dadurch gekennzeichnet, dass** das Schneidwerkzeug (6) von einer programmierbaren Servomotor-Getriebekombination (9) oder einer programmierbaren Motor-Schrittschaltgetriebekombination angetrieben ist, mittels welcher die Länge der Ruhepausen und/oder die Schnittgeschwindigkeit des Schneidwerkzeugs veränderbar ist.

4. Schneidvorrichtung nach einem der vorhergehenden Ansprüche, **dadurch gekennzeichnet, dass** die Düse zwischen drei und acht Trennstegen (4) aufweist und jedem Trennsteg (4) ein Messer (7) zugeordnet ist.

5. Schneidvorrichtung nach einem der vorhergehenden Ansprüche, **dadurch gekennzeichnet, dass** die Längsachsen der Austrittsöffnungen (4) im wesentlichen parallel zur Längsachse der Düse (1) verlaufen, dass die Trennstege im wesentlichen senkrecht zur Längsachse der Düse (1) verlaufen und die Drehachse des Schneidwerkzeugs (6) koaxial zur Längsachse der Düse (1) verläuft.

6. Schneidvorrichtung nach einem der vorhergehenden Ansprüche, **dadurch gekennzeichnet, dass** die Düse (1) mit einer Düsenplatte (2) versehen ist, in welche die Austrittsöffnungen (4) eingelassen sind und das Schneidwerkzeug (6) zentrisch in der Düsenplatte (2) gelagert ist.

7. Schneidvorrichtung nach Anspruch 6, **dadurch gekennzeichnet, dass** das Schneidwerkzeug (6) mittels eines Loslagers (19) in der Düsenplatte (2) gelagert und in axialer Richtung relativ zur Düsenplatte (2) verschiebbar angeordnet ist.

8. Schneidvorrichtung nach einem der vorhergehenden Ansprüche, **dadurch gekennzeichnet, dass** die Längsachsen der Austrittsöffnungen im wesentlichen radial zur Längsachse der Düse verlaufen und die Drehachse des Schneidwerkzeugs koaxial zur Längsachse der Düse verläuft.

9. Verfahren zum Betrieb einer Schneidvorrichtung nach einem der vorhergehenden Ansprüche, **dadurch gekennzeichnet, dass** das Schneidwerkzeug (6) intervallmässig derart bewegt wird, dass das einzelne Messer (7) zwischen zwei Schneidvorgängen hinter einem Trennsteg (4b) in der Ruheposition verharrt, während es zur Ausführung eines Schneidvorgangs an einer Austrittsöffnung (3) vorbei zu einem benachbarten Steg (4b, 4c) bewegt wird.

10. Verfahren nach Anspruch 9, **dadurch gekennzeichnet, dass** die Dauer der Ruhepausen und/oder die Schnittgeschwindigkeit des Schneidwerkzeugs mittels einer programmierbaren Steuereinheit verändert werden.

11. Verfahren nach Anspruch 9 oder 10, **dadurch gekennzeichnet, dass** über die Dauer der Ruhepausen des Schneidwerkzeugs (6) die Länge der abzutrennenden Materialstrang-Abschnitte bestimmt wird.

12. Verfahren nach einem der Ansprüche 9 bis 11, **dadurch gekennzeichnet, dass** die Schnittgeschwindigkeit der Messer (7) des Schneidwerkzeugs (6) in Abhängigkeit des zu schneidenden Materials verändert wird.

13. Verfahren nach einem der Ansprüche 9 bis 12, **dadurch gekennzeichnet, dass** ein Schneid-Intervall innerhalb einer Zeitdauer von maximal 0.2 Sekunden, vorzugsweise weniger als 0.1 Sekunden, durchgeführt wird.
